Europäisches Patentamt

European Patent Office

Office européen des brevets

(11) Publication number: **0 262 767 B1**

# EUROPEAN PATENT SPECIFICATION

(45) Date of publication of patent specification: **20.05.92**    (51) Int. Cl.5: **B65D 17/00**

(21) Application number: **87306802.7**

(22) Date of filing: **31.07.87**

(54) **Easily openable easy open end.**

(30) Priority: **02.09.86 JP 206432/86**
**10.12.86 JP 295364/86**
**10.12.86 JP 295365/86**

(43) Date of publication of application:
**06.04.88 Bulletin   88/14**

(45) Publication of the grant of the patent:
**20.05.92 Bulletin   92/21**

(84) Designated Contracting States:
**DE FR GB IT**

(56) References cited:
**DE-A- 3 222 655**
**FR-A- 793 024**
**GB-A- 1 263 091**
**US-A- 4 564 119**

(73) Proprietor: **NIPPON STEEL CORPORATION**
**6-3 Otemachi 2-chome Chiyoda-ku**
**Tokyo 100(JP)**

(72) Inventor: **Kawano, Tsuyoshi**
**1-41, Takami-5-chome Yahatahigashi-ku**
**Kitakyushu-shi(JP)**
Inventor: **Nosaka, Shoji**
**4-3-303, Tsuchitorimachi Tobata-ku**
**Kitakyushu-shi(JP)**
Inventor: **Tanimoto, Shinji**
**5-1, Higashisayagatanimachi Tobata-ku**
**Kitakyushu-shi(JP)**
Inventor: **Oyagi, Yahichi**
**10-13-204, Tetsuo-1-chome Yahatanishi-ku**
**Kitakyushu-shi(JP)**
Inventor: **Yamada, Kenji**
**3-1, Tenjinmachi Yahatahigashi-ku**
**Kitakyushu-shi(JP)**

(74) Representative: **Carter, Caroline Ann et al**
**ABEL & IMRAY Northumberland House**
**303-306 High Holborn**
**London WC1V 7LH(GB)**

**Description**

BACKGROUND OF THE INVENTION

FIELD OF THE INVENTION

The present invention relates to an Easy Open End having a partially removable section defined by a principal score line (hereinafter abbreviated to "EOE") which allows the initial opening and tearing of an removable section of the EOE to be performed easily and smoothly.

DESCRIPTION OF THE PRIOR ART

An EOE is an end of a container which can be opened by the pulling an opening tab secured to the partially removable section without the use of a tool such as a can opener. Because of this advantage, EOEs are widely used in cans such as food cans, soda drink cans, and beer cans.

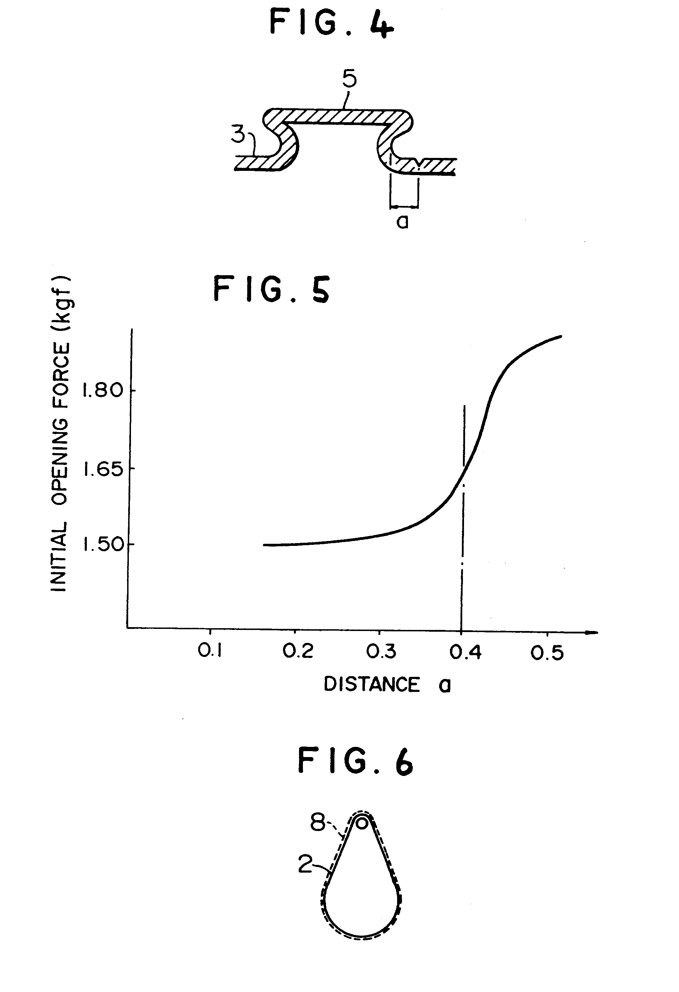

In order to reduce the opening force of EOEs, various proposals concerning them have hitherto been made. For instance, Japanese Patent Laid-Open No. 149251/1983 proposes an EOE provided with a principal score and an auxiliary score 8 adjacent thereto, as shown in Fig. 6.

By thus providing an auxiliary score, a certain improvement in the reduction of the opening force can be obtained.

US-A-4 564 119 describes an aluminium alloy can in which a circular severing score is formed in the can end along the periphery thereof for severing the area defined by the score from the can end. A manipulating tab having a sharpened end is attached to the severable area, the sharpened end being adapted to pierce a portion of the area adjacent to the score thereby permitting the severable area to be severed from the can. A plurality of elongated parallel ridges or recessed grooves may be formed within the severable area to allow the area easily to assume an outwardly concave form when the tab is pulled.

The force required for opening an EOE mainly comprises an initial opening force required at the beginning of an opening operation, a force required for tearing the removable section, and a force required for separating the removable section from the other part of the can end panel. In order to improve the opening ability, the first requisite is to make it possible for these forces to be effective at reduced levels. Further when the difference among these forces is made small also, it becomes possible to open the EOE smoothly, thus achieving an optimum opening ability. If the force required for tearing the removable section is relatively large among these three forces, the removable section will be separated by an excessively large force. As a result, an unexpected motion involving impact or vibration is transmitted to the can, causing the contents to run out.

SUMMARY OF THE INVENTION

Accordingly, an object of the present invention is to facilitate the opening of an EOE by allowing reduced forces to be effective for the initial opening and the tearing of the removable section.

According to the present invention there is provided an EOE of a can comprising a panel having a removable section defined by a principal score and an opening tab secured to said removable section at a tab securing portion in the vicinity of an end of the removable section, characterised in that said removable section has a plurality of machined portions that extend at an angle of not more than 45° with respect to a line normal to the longitudinal axis of the removable section, the pitch between the machined portions is in the range 2 to 5 mm so as to reduce the bending rigidity of said removable section in the tearing direction thereof, and the axial distance between the end of said tab securing portion of said opening tab and said score of the end of said removable section is not more than 0.4 mm.

In order to achieve the above-stated object, the present invention provided an EOE of a can comprising a panel, a removable section in the panel defined by a fixing a principle score and an opening tab secured to the removable section, and moreover the removable section has a plurality of machined portions designed to reduce the bending rigidity of the removable section in the tearing direction thereof.

BRIEF DESCRIPTION OF THE DRAWINGS

Figs. 1A to 1D are plan views of EOEs in accordance with a first embodiment of the present invention;
Figs. 2A to 2D are plan views of removable sections of EOEs in accordance with a second embodiment of the present invention;

Figs. 3A to 3E are enlarged sectional views showing examples of different possibilities for the construction of each of the removable sections of the EOEs shown in Figs. 1A to 1D and Figs. 2A to 2D;

Fig. 4 is an enlarged sectional view through a part of a tab securing portion in a removable section in accordance with a third embodiment of the present invention which is drawn to an enlarged scale to show the distance between an end of the removable section and an end of the tab securing portion, the distance being used as a reference factor for reducing the required initial opening force;

Fig. 5 is a graph showing the relationship between the distance between the end of the removable section and the tab securing portion and the initial opening force; and

Fig. 6 is a plan view of a removable section of a conventional EOE.

DESCRIPTION OF THE PREFERRED EMBODIMENTS

The features of the present invention will now be described in detail with respect to the illustrated embodiments.

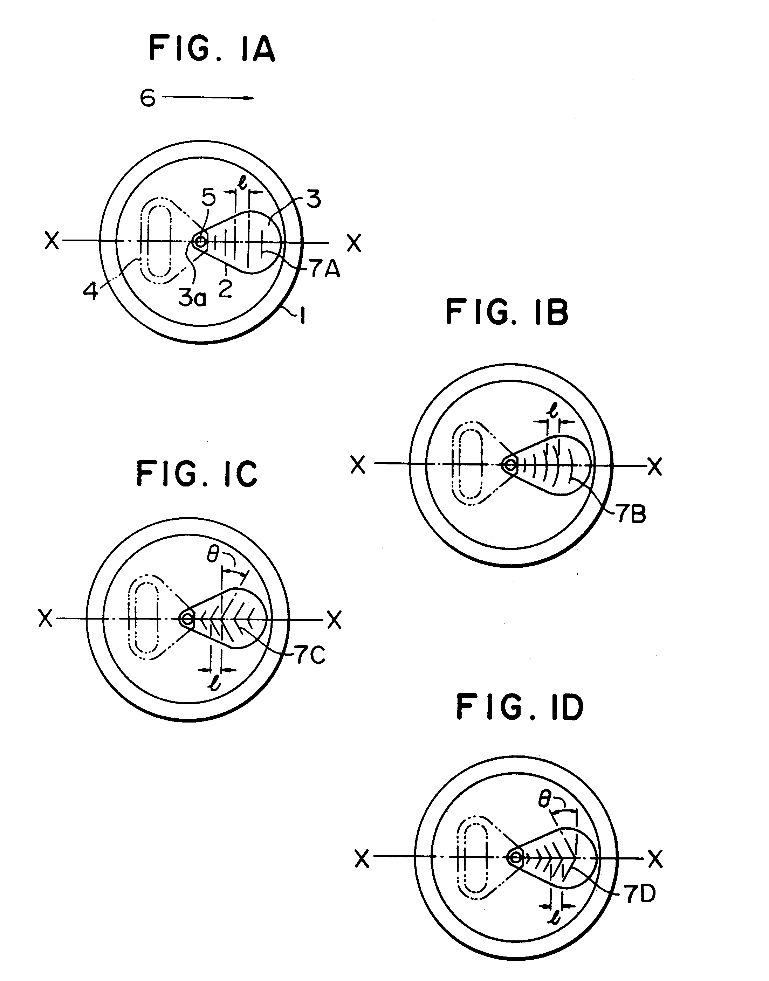

Fig. 1 shows EOEs in accordance with a first embodiment of the present invention.

Figs. 1A to 1D each show an EOE 1. The EOE 1 has a principal score 2 formed therein to define a removable section 3. The removable section 3 has a pressformed hollow rivet (in an end of a portion) thereof, that is, at or near the center of the can end. The shank of the rivet passes through a small hole of an opening tab 4. And then the upper end of the rivet is formed with an enlarged head which overlies the metal of the tab around the hole to secure the opening tab 4 to the removable section, thereby forming a tab securing portion 5. When the opening tab 4 provided in this way is raised from the can end and pulled initially the end 3a of the removable section 3 that is closer to the tab securing portion 5 is ruptured, and the removable section 3 is subsequently torn from the end panel along the score 2.

In the embodiment illustrated in Figs. 1A to 1D, the removable sections 3 are each provided with a plurality of machined portions 7A to 7D, respectively, each of which crosses the center line along the tearing direction 6, that is, the longitudinal axis X-X of the removable section 3.

Figs. 1A to 1D show four examples of the machined portions 7A to 7D, respectively. The machined portions which are illustrated in these figures and are applicable to the can end may be for example linear machined portions 7A, arcuate machined portions 7B, inverted-V-shaped machined portions 7C, V-shaped machined portions 7D, and so on.

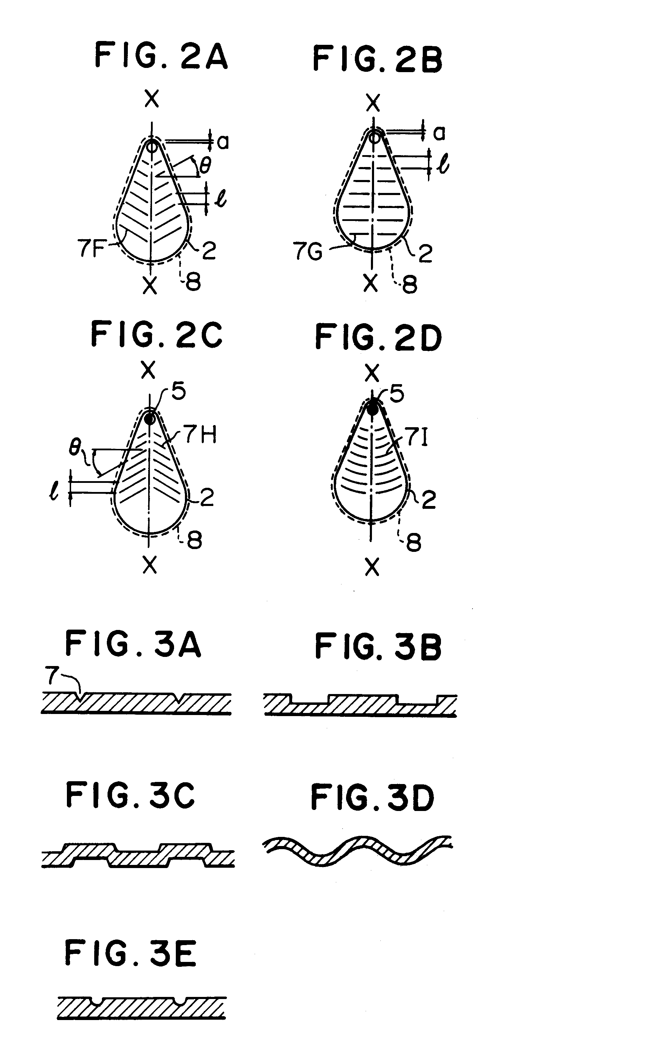

Figs. 2A to 2D illustrate a second embodiment of the invention where the removable section 3 of the can ends are each provided with machined portions which do not cross the longitudinal axis X-X of the removable section 3. Four examples of the machined portions 7F, 7G, 7H, and 7I are shown in these figures.

Some enlarged sectional view of the machined portions shown in Figs. 1A to 1D and Figs. 2A to 2D are shown in partial sections in Figs. 3A to 3E. As shown in these figures, the machined portions are preferably formed in such a manner that they are either V-shaped grooves (Fig. 3A), thin-wall portions (Fig. 3B), angular or curved corrugated portions (Fig. 3C or 3D), or U-shaped grooves (Fig. 3E). Also beads in cross-section inwardly or outwardly are applicable.

By virtue of these machined portions, the bending rigidity of the removable section 3 in the tearing direction 6 is reduced. Therefore, when the removable section 3 is being torn in the tearing direction 6, it can be bent easily in the axial direction X-X. This arrangements allows the deformation of the removable section 3 at the start of the opening to concentrate on a portion of the principal score 2 which borders on the end 3a of the removable section 3 and is around the tab securing portion 5. As a result, it is possibly not only to reduce the opening force required at the start of the opening, but also to facilitate tearing of the removable section 3 along the score 2. In addition, since the tearing conducted in this way requires a small force, it is possible to prevent any excessive force when it is separated from the end panel.

In the machined portions 7A, 7B, 7C, 7D, 7E, 7F, 7G, 7H, and 7I formed in the removable section 3, the pitch $l$ between two adjacent machined portions is preferably 2 to 5 mm. That is, when the pitch $l$ is set at a value within this range, the bending motion of each portion of the removable section 3 which has its bending rigidity reduced by a machined portion can be followed by a similar motion of the adjacent portion, thus ensuring that the overall effect of reducing the tearing force can be positively obtained. On the other hand, if the pitch $l$ exceeds 5 mm, the tearing force varies, thus obstructing a smooth tearing operation. If the pitch $l$ is less than 2 mm, the bending rigidity of the removable section is reduced to an excessive degree, thus leading to a risk that the removable section might be partially torn off.

EP 0 262 767 B1

When the machined portions 7C, 7D, 7F, or 7H having the shape of an inverted "V" or a "V" are formed, the angle $\theta$ to a line normal to the axis X-X is preferably not more than 45 degrees. If the angle $\theta$ exceeds 45 degrees, the effect of the machined portions 7C, 7D, 7F or 7H on the reduction in the rigidity of the removable section 3, which is designed to facilitate the bending of the removable section 3 in the axial direction X-X, is decreased.

In the embodiment illustrated in Figs. 2A to 2D, since the machined portions of each example do not cross the longitudinal axis X-X, the removable section 3 is prevented from bending sharply at the machined portions 7F, 7G, 7H, or 7I, thus enabling a smooth tearing operation.

The EOE of the present invention may be of the type which has a shallow auxiliary score 8 formed along and in parallel with a principal score 2.

Fig. 4 shows another embodiment of the invention, in which the EOE has a removable section 3 which is adapted to have a reduced bending rigidity in the direction 6 in the above-described arrangement and further another arrangement is also applied to reduce the force required at the start of the opening. More specifically the latter arrangement comprises setting the distance a in the axial direction X-X between the end of the tab securing portion 5 and the end 3a of the removable section 3 which are close to the tab 4 at a value not more than 0.4 mm, preferably one not more than 0.3 mm.

Fig. 5 shows the relationship between the distance a of this embodiment and the initial opening force. The EOE as shown in Fig. 1B if formed of, for example, tinplate having a thickness of 0.25 mm and a temper degree of T4. It will be clear from Fig. 5 that the initial opening force drops sharply when the distance a is about 0.4 mm and drops gradually as the distance a becomes less than 0.3 mm. This sharp drop is considered to be caused by the fact that the end 3a of the removable section 3 is affected by the presence of the tab securing portion 5 which is more rigid so that the stress concentrates more locally, thereby enabling the removable section to be operated initially with a small force.

This arrangement, together with the above-described machined portions, provides the effect of enabling both the initial opening and the tearing to be performed smoothly. In addition, since it is possible to prevent an excessively large force acting on the removable section 3 when it is being separated from the can panel, any motion involving vibration of or impact to the can caused by the reaction force of such an excessively large force can be reduced.

Next, the difference between effects of various configurations of the removable section on the opening ability of the EOE will be described, with respect to specific samples. The EOE is made of, for example, tinplate having a thickness of 0.23 mm and a temper degree of T4.

The configurations of the removable section examined here include the five types shown in Figs. 2A and 2B and Fig. 6. A sample No. 1, corresponding to the conventional EOE, has a removable section without any machined portions, as shown in Fig. 6, and has the auxiliary score 8 formed along the principal score 2. A sample No. 2 is an EOE of the type shown in Fig. 2A and have a removable section 3 having a plurality of machined portions 7F, machined portion 7F forming an angle $\theta$ of 30 degrees relative to a line normal to the longitudinal axis X-X. Samples Nos. 3 and 4 are EOEs of the type shown in Fig. 2B and have a removable section 3 each having machined portions 7G, each machined portion 7G being normal to the longitudinal axis X-X. In each of the samples Nos. 1 to 4 of the type shown in Figs. 2A and 2B, the pitch $\ell$ between two adjacent machined portions is set at about 2.5 mm, and the machined portions are formed as grooves having a V-shaped section shown in Fig. 3A.

The initial opening force (value Fp) and the tearing force (value Ft) required to open each of these EOE samples were measured. The results of the measurement are shown in Table 1 below. As shown in Table 1, the distance a between the end of the tab securing portion 5 and the end 3a of the removable section 3 is set at 0.4 mm in the samples Nos. 1 to 3, while it is set at 0.2 mm in the sample No. 4. When the sample No. 1, corresponding to the conventional EOE, and the EOE samples Nos. 2 and 3 according to the present invention, are compared, it will be clear that both the values Fp and Ft are reduced in the EOEs of the present invention. It will be also clear from Table 1 that the sample No. 4 in which the distance a is set at 0.2 mm exhibits a further reduction in the value Fp, i.e., the initial opening force.

4

Table 1

| Sample No. | Type of Configuration of Openable Portion | Distance a | Fp | Ft |
|---|---|---|---|---|
| 1 | Fig. 6 | 0.4 mm | 1.80 | 3.20 |
| 2 | Fig. 2A | 0.4 mm | 1.50 | 2.48 |
| 3 | Fig. 2B | 0.4 mm | 1.47 | 2.45 |
| 4 | Fig. 2B | 0.2 mm | 1.28 | 2.45 |
| Note: Both the values Fp and Ft are expressed as kgf. | | | | |

Tinplate or aluminum sheet is usually used as the material for the EOE 1. However, this is not limitative, and for example any of the following materials can be used:

(1) Iron and iron alloys, or non-ferrous metals such as aluminum and aluminum alloys;

(2) A metal material obtained by subjecting a material according to Item (1) to a surface treatment such as plating or coating;

(3) A composite metal material obtained by bonding a layered organic material such as resin to a material according to Item (1) and/or a metal material according to Item (2);

(4) A composite metal material obtained by superposing layers of a material accoridng to Item (1) and/or different metal materials according to Item (2).

The present invention further provides an Easy Open End of a can comprising a panel, a removable section in said panel defined by a principal score, and an opening tab secured to said removable portion, the removable section having for example a plurality of machined portions each of which crosses the center line along the tearing direction of said removable section and is designed to reduce the bending rigidity of said removable section in the tearing direction.

In another aspect of the invention the said removable section may have a plurality of machined portions each of which does not cross the center line along the tearing direction of said removable section, is impressed along a direction crossing the tearing direction and is designed to reduce the bending rigidity of said removable section in the tearing direction. The machined portions are preferably formed as grooves having a V-shaped, U-shaped, thin-wall cross-section, as corrugation in cross-section, or as beads in cross-section, and extend in a plan view linearly, in a curved manner, in a V-shape, or in an inverted-V-shape.

Moreover, in accordance with the invention the removable section may be provided with other means of reducing the bending rigidity of the said removable section in the tearing direction, for example, the removable section may be provided with a plurality of thin-wall portions or a plurality of dimples each of which is designed to reduce the bending rigidity of said removable section in the tearing direction thereof.

The present invention also provides an easy open end of a can comprising a panel, a removable section in the said panel defined by a principal score and an opening tab secured to said removable section by a tab securing portion, the removable section comprising means to reduce the bending rigidity thereof in the tearing direction, wherein the axial distance between the end of said tab securing portion and the end of said removable section which is closer to said opening tab is not more than 0.4 mm.

Further, the present invention provides a panel for a can, comprising a removable section defined by a principal score and an opening tab secured to the said removable section, the removable section comprising means for reducing the bending rigidity of the said removable section in the tearing direction thereof.

**Claims**

**1.** An Easy Open End of a can comprising a panel having a removable section (3) defined by a principal score (2) and an opening tab (4) secured to said removable section at a tab securing portion (5) in the vicinity of an end (3a) of the removable section, characterised in that said removable section has a plurality of machined portions (7) that extend at an angle ($\theta$) of not more than 45° with respect to a line normal to the longitudinal axis (X-X) of the removable section, the pitch (1) between the machined portions is in the range 2 to 5 mm so as to reduce the bending rigidity of said removable section in the tearing direction thereof, and the axial distance between the end of said tab securing portion (5) of said opening tab (4) and said score (2) of the end (3a) of said removable section (3) is not more than 0.4 mm.

5

**2.** An Easy Open End of a can according to Claim 1, wherein each of said machined portions (7) crosses the longitudinal axis (X-X) of said removable section (3).

**3.** An Easy Open End of a can according to Claim 1, wherein each of said machined portions does not cross the longitudinal axis (X-X) of said removable section (3).

**4.** An Easy Open End of a can according to any of Claims 1 to 3, wherein said machined portions (7) are formed as grooves or thin-walled portions and are linear, curved V-shaped or inverted-V-shaped.

**5.** An Easy Open End of a can as claimed in any one of claims 1 to 4, wherein the non-removable part of the panel has uniform rigidity.

**Revendications**

**1.** Fermeture à ouverture facile d'une boîte métallique comprenant une paroi ayant une section amovible (3) définie par une entaille principale (2) et une patte d'ouverture (4) fixée à ladite section amovible dans une partie de fixation de patte (5) au voisinage d'une extrémité (3a) de la section amovible, caractérisée en ce que ladite section amovible a une pluralité de parties usinées (7) qui forment un angle ($\theta$) ne dépassant pas 45° par rapport à une ligne perpendiculaire à l'axe longitudinal (X-X) de la section amovible, en ce que l'intervalle (1) entre les parties usinées est dans la plage de 2 à 5 mm de façon à réduire la rigidité à la flexion de ladite section amovible dans sa direction d'arrachement et en ce que la distance axiale entre l'extrémité de ladite partie de fixation de patte (5) de ladite patte d'ouverture (4) et ladite entaille (2) de l'extrémité (3a) de ladite section amovible (3) ne dépasse pas 0,4 mm.

**2.** Fermeture à ouverture facile d'une boîte métallique selon la revendication 1, dans laquelle chacune desdites parties usinées (7) coupe l'axe longitudinal (X-X) de ladite section amovible (3).

**3.** Fermeture à ouverture facile d'une boîte métallique selon la revendication 1, dans laquelle chacune desdites parties usinées ne coupe pas l'axe longitudinal (X-X) de ladite section amovible (3).

**4.** Fermeture à ouverture facile d'une boîte métallique selon l'une quelconque des revendications 1 à 3, dans laquelle lesdites parties usinées (7) sont formées comme des encoches ou des parties où la paroi est plus mince, et sont linéaires, en V incurvé ou en V inversé.

**5.** Fermeture à ouverture facile d'une boîte métallique selon l'une quelconque des revendications 1 à 4, dans laquelle la partie non amovible de la paroi présente une rigidité uniforme.

**Patentansprüche**

**1.** Leicht zu öffnender Verschluß (EASY OPEN END) einer Dose, die eine Platte aufweist, mit einem entfernbaren Abschnitt (3), der durch eine Hauptkerbe (2) definiert wird, und einer Öffnungslasche (4), die an dem entfernbaren Abschnitt an einem Laschenbefestigungsabschnitt (5) in der Nähe eines Endes (3a) des entfernbaren Abschnitts befestigt ist, **dadurch gekennzeichnet,** daß der entfernbare Abschnitt mehrere maschinell bearbeitete Abschnitte (7) hat, die sich in einem Winkel ($\theta$) von nicht mehr als 45° in bezug auf eine Linie senkrecht zur Längsachse (X-X) des entfernbaren Abschnitts erstrecken, wobei der Abstand (1) zwischen den maschinell bearbeiteten Abschnitten in dem Bereich 2 bis 5 mm liegt, so daß die Biegesteifigkeit des entfernbaren Abschnitts in seiner Zugrichtung verringert wird, und der Axialabstand zwischen dem Ende des Laschenbefestigungsabschnitts (5) der Öffnungslasche (4) und der Kerbe (2) des Endes (3a) des entfernbaren Abschnitts (3) nicht größer als 0,4 mm ist.

**2.** Leicht zu öffnender Verschluß einer Dose nach Anspruch 1, wobei jeder maschinell bearbeitete Abschnitt (7) die Längsachse (X-X) des entfernbaren Abschnitts (3) kreuzt.

**3.** Leicht zu öffnender Verschluß einer Dose nach Anspruch 1, wobei jeder maschinell bearbeitete Abschnitt die Längsachse (X-X) des entfernbaren Abschnitts (3) nicht kreuzt.

4.  Leicht zu öffnender Verschluß einer Dose nach einem der Ansprüche 1 bis 3, wobei die maschinell bearbeiteten Abschnitte (7) als Nuten oder dünnwandige Abschnitte ausgebildet sind und geradlinig, gekrümmt, V-förmig oder umgekehrt V-förmig sind.

5.  Leicht zu öffnender Verschluß einer Dose nach einem der Ansprüche 1 bis 4, wobei der nicht-entfernbare Teil der Platte eine einheitliche Steifigkeit hat.

# FIG. IA

# FIG. IB

# FIG. IC

# FIG. ID

FIG. 2A

FIG. 2B

FIG. 2C

FIG. 2D

FIG. 3A

FIG. 3B

FIG. 3C

FIG. 3D

FIG. 3E

# FIG. 4

# FIG. 5

# FIG. 6